# EUROPEAN PATENT SPECIFICATION

(11) **EP 2 582 967 B1**
(45) Date of publication and mention of the grant of the patent: **12.10.2016**
(21) Application number: 11758268.4
(22) Date of filing: 30.08.2011
(51) Int. Cl.: F03D 15/00, F03D 80/00, F04B 49/02, F03D 80/80, F03D 9/00, F04B 1/053, F03D 1/00, F04B 9/02

(54) **METHOD OF MAINTAINING HYDRAULIC PUMP OF THE HYDRAULIC TRANSMISSION IN A RENEWABLE ENERGY TURBINE GENERATOR AND HYDRAULIC PUMP IN A RENEWABLE ENERGY TURBINE GENERATOR**
VERFAHREN ZUM WARTEN DER HYDRAULIKPUMPE DES HYDRAULIKGETRIEBES IN EINEM TURBINENGENERATOR FÜR ERNEUERBARE ENERGIEN SOWIE HYDRAULIKPUMPE IN EINEM TURBINENGENERATOR FÜR ERNEUERBARE ENERGIEN
PROCÉDÉ DE MAINTENANCE D'UNE POMPE HYDRAULIQUE APPARTENANT À LA TRANSMISSION HYDRAULIQUE UTILISÉE DANS UN GÉNÉRATEUR À TURBINE À ÉNERGIE RENOUVELABLE ET POMPE HYDRAULIQUE COMPRISE DANS UN GÉNÉRATEUR À TURBINE À ÉNERGIE RENOUVELABLE

(43) Date of publication of application: 24.04.2013
(73) Proprietor: MITSUBISHI HEAVY INDUSTRIES, Ltd., Tokyo 108-8215 (JP)
(72) Inventor: SALTER, Stephen, Loanhead Midlothian EH20 9TB (GB); STEIN, Uwe, Loanhead Midlothian EH20 9TB (GB); DODSON, Henry, Loanhead Midlothian EH20 9TB (GB); FOX, Robert, Loanhead Midlothian EH20 9TB (GB); ROBERTSON, Alasdair, Loanhead Midlothian EH20 9TB (GB); MCGRATH, Tom, Loanhead Midlothian EH20 9TB (GB)
(74) Representative: Hindle, Alistair Andrew
(86) International application number: PCT/JP2011/004824
(87) International publication number: WO 2013/030874

(56) References cited:
- EP-A2- 2 154 368
- WO-A2-2009/076757
- DE-A1- 4 318 073

## Description

### Technical Field

The invention relates to the field of large hydraulic pumps for use in renewable energy turbine generators, such as wind turbine generators (WTGs), and to methods and apparatus for maintaining hydraulic pumps of that type.

### Background Art

Issues concerning the present invention will now be described with reference to hydraulic pumps coupled to the blades of a WTG, however similar issues apply in respect of large hydraulic pumps for use in other renewable energy turbine generators.

WTGs are known which include large hydraulic pumps mounted in a nacelle high above the ground. In a WTG of that type, the hydraulic pump is coupled to the turbine blades through a drive shaft (and optionally a gear box) and is connected through a hydraulic circuit to at least one hydraulic motor which in turn drives an electricity generator.

The pumps are difficult to maintain, firstly because they are large and heavy, and so require heavy lifting apparatus, such as cranes to move the pump, or component parts thereof, and secondly because they are far from the ground. Maintenance is especially difficult for offshore WTGs which stand in water and can only be accessed by boat or helicopter.

PCT/GB2011/050355 (Artemis Intelligent Power Limited) discloses a large, maintainable pump suitable for use in a WTG in which an outward ring is formed from demountable blocks which are individually removable in a radial direction, enabling components of an inward ring, such as ring cam segments, to be accessed or removed for maintenance. Nevertheless, it can still be difficult to remove some of the demountable blocks located in different orientations.

Accordingly, the invention addresses the technical problem of maintaining large hydraulic pumps in situ within WTGs and other renewable energy extraction devices.

EP2154368A2 discloses a wind energy system (100) with hydraulic energy transmission with non-symmetric actuation. The non-symmetric actuation is for instance caused by valve control and mechanical means for controlling the actuation of the pistons (338). A cylinder unit (330) is provided comprising a drive unit (331) and an output unit (332) associated with two hydraulic connections (333, 334). The drive and the output unit comprise a minimum of two cylinders (337), in which pistons (338) are reciprocating. Some of the cylinders can be switched off during low wind speeds.

The cylinders communicate with a low pressure manifold (335) and a high pressure manifold (336). These manifolds are part of the hydraulic connections. EP2154368A2 does not disclose a hydraulic pump configured such that an outward ring can be rotated about a drive shaft until a demountable part reaches a selected position from which it can be removed.

### Summary of Invention

According to a first aspect of the invention there is provided a method of removing a demountable cylinder block from a hydraulic pump in a renewable energy turbine generator, wherein the hydraulic pump comprises:
an inward ring comprising a cam having a cam surface;
an outward ring comprising one or more demountable cylinder blocks, at least some of the demountable cylinder blocks comprising cylinders, with pistons slidably mounted in the cylinder and in engagement with the cam surface;
first and second axially spaced structural members disposed on opposite sides of the cam;
a housing which is removable (e.g. axially slidable or disassemblable) to reveal internal components (for example, the cylinders and cam) for maintenance and repair; and
a drive shaft coupled to the inward ring;
the method characterised by rotating the outward ring about the drive shaft (which typically remains fixed in position) until the demountable cylinder block reaches a selected position, and then removing the demountable cylinder block at the selected position, wherein the outward ring including the demountable cylinder block is configured to be rotatable about the drive shaft while the inward ring is fixed in position during maintenance of the hydraulic pump so that the selected block reaches the selected position.

Thus, at least the outward ring (and in some embodiments also the inward ring) is rotated until the demountable cylinder block is at a position selected to facilitate removal of the demountable cylinder block. Preferably, the drive shaft remains fixed in position during rotation and the removal of the demountable cylinder block.

The invention therefore enables convenient maintenance of large hydraulic pumps in renewable energy turbine generators. The hydraulic pump may, for example, have a mass of greater than 10 tons, or greater than 50 tons. The hydraulic pump may be mounted greater than 50m, or greater than 100m above the ground. The hydraulic pump may be mounted in the nacelle of a wind turbine generator, for example, an offshore wind turbine generator.

The demountable cylinder block may comprise one or more cylinders or valves.

Typically, the outward ring comprises a plurality of demountable cylinder blocks arranged around the axis of the outward ring and the outward ring is rotated until at least one selected demountable cylinder block of the plurality of demountable cylinder blocks reaches the selected position.

The cam may be a multi-lobed ring cam.. The outward ring may comprise a plurality of demountable cylinder blocks arranged around the axis of the outward ring. In some embodiments, the inward ring comprises a plurality of inward demountable parts (e.g. segments of a ring cam) and the outward ring comprises a plurality of demountable cylinder blocks and the method comprises removing one or more of the inward demountable parts after
removing one or more of the demountable cylinder blocks of the outward ring which cover the respective inward demountable part.

After the removal of one or more demountable cylinder blocks, the method may comprise rotating the inward ring (after decoupling the inward ring from the turbine blades, for example by decoupling the drive shaft from the inward ring, gears (if present) or the turbine blades) to reveal parts of the inward ring through the gap left by the removed demountable cylinder blocks. The revealed parts of the inward ring may be said inward demountable parts, such as segments of a ring cam.

Preferably, the outward ring of the hydraulic pump is generally rotationally
symmetric. Preferably, the inward ring of the hydraulic pump is generally rotationally symmetric. Preferably, the hydraulic pump is generally rotationally symmetric.

Typically, the drive shaft is coupled through bearings to the outward ring and the
first and second axially spaced structural members (e.g. end plates).

It may be that the outward ring has an axis extending through the drive shaft and the
selected position is above the height of the axis.

In some embodiments, the selected position may be at the top of the outward ring.

The method may comprise the steps of fixing the angular position of the inward ring
and actuating the pump to rotate the outward ring relative to the inward ring until the demountable cylinder block reaches the selected position.

It may be that the drive shaft is rotated and then locked into position (for example, by way of a pin extending through the inward ring), the outward ring is decoupled from the chassis of the renewable energy turbine generator, and the outward ring is then rotated relative to the inward ring.

Once the outward ring is in the desired rotational position, in order to obtain access to the desired part of the inward ring, the torque arm may be left connected so the outward ring is stationary. The driveshaft may then be rotated (while the driveshaft is fixed to the inward ring). Rotation may continue until the respective part of the inward ring reaches a desired position (i.e. directly in line with a removed portion(s) of outward ring.

The outward ring may therefore be driven by a motor (e.g. a positioning worm drive) acting on the outward ring or, where the outward ring is fixed to the inward ring, acting on the drive shaft.

In some embodiment, the hydraulic pump may be operated to rotate the outward ring relative to the inward ring. Typically, operating the pump to rotate the outward ring relative to the inward ring comprises supplying pressurised fluid to at least some of the said cylinders to cause the piston cylinders to carry out motoring cycles and thereby drive the outward ring to rotate relative to the inward ring. In this case, hydraulic fluid is retained within the hydraulic pump whilst the outward ring is rotated relative to the inward ring.

The hydraulic pump may comprise one or more torque reaction devices (e.g. one or more torque arms) which detachably connect the pump to a support (e.g. a chassis, base, or the nacelle of a wind turbine generator) to prevent rotation of the pump during normal operation, and the method comprises detaching the one or more torque reaction devices to enable the pump to be rotated relative to the support.

The one or more torque reaction devices may be detachable by sliding (of the pump or of the torque reaction devices), typically after the removal of connectors, such as bolts. It may be that the torque reaction devices require to move by less than 10mm for the pump ring to be rotatable. The one or more torque reaction devices may be disassembled, at least in part to detach the pump from the support.

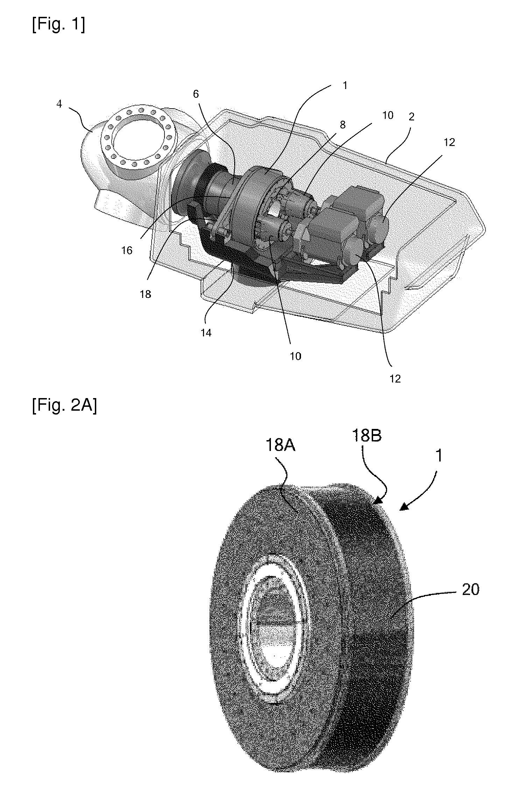

The method of moving the demountable cylinder block until it reaches the desired position may
in part be determined by the nacelle arrangement and the configuration of the one or more torque reaction devices. For example in respect of Figure 1, there is no space to rotate the torque arm together. It would therefore be necessary to disconnect the torque arm from the pump to rotate the outward ring. For other arrangements, an operative may disconnect a torque arm from the nacelle and subsequently rotate the pump and torque arm as a unit.

However, typically hydraulic fluid is drained from the hydraulic pump before the
outward ring is rotated relative to the inward ring.

It may be that the hydraulic pump comprises electrical connecters for coupling electrical devices within the hydraulic pump (e.g. electronically controlled valves which regulate the flow of hydraulic fluid between a hydraulic line and a cylinder) to external electrical connections and the method comprises decoupling the electrical connecters before the outward ring is rotated.

It may be that the hydraulic pump comprises hydraulic connecters for coupling hydraulic lines within the hydraulic pump (e.g. hydraulic lines supplying hydraulic fluid to or receiving hydraulic liquid from the cylinders) to external hydraulic lines, and the method comprises decoupling the hydraulic connecters before the outward ring is rotated. The hydraulic connectors may comprise seals.

It may be that the one or more torque reaction devices comprises at least one
electrical cable through which electrical signals are provided to or received from the hydraulic pump, by way of a said electrical connector. It may be that all electrical connections to the hydraulic pump are made through electrical cables within the one or more torque reaction devices. The method may comprise detaching a said electrical cable from a said electrical connector. It may be that the one or more torque reaction devices comprises at least one hydraulic line through which hydraulic fluid is supplied to or received from the hydraulic pump by way of the said hydraulic connectors. It may be that all hydraulic connections to the hydraulic pump are made through hydraulic lines which extend through the one or more torque reaction devices. The method may comprise detaching a said hydraulic line from a said hydraulic connector. These features have the advantage of simplifying the procedure of coupling the hydraulic pump to and decoupling the hydraulic pump from the chassis of the renewable energy turbine generator, as the same structures provide torque reaction and either or both electrical and hydraulic connections.

It may be that the electrical connecters and the hydraulic connecters are all located on the same side (i.e. axially opposed faces) of the pump. This facilitates decoupling. The one or more torque reaction devices may also be located on the same side of the pump. It may be that the method comprises further detaching one or more detachable sensors from the hydraulic pump before rotating the outward ring.

It may be that the outward ring comprises a plurality of connecting formations (e.g. apertures) and the method comprises connecting a crane to a said connecting formation and causing the crane to pull on the connecting formation to thereby rotate the outward ring.

The plurality of demountable cylinder blocks may be demounted from different angles.

It may be that the demountable cylinder block is removed using a lifting device which exerts a lifting force which is the majority of the lifting force required to remove the demountable cylinder block and wherein a human operative provides the balance of the force required to remove the demountable part.

The demountable cylinder block may be removed using a lifting device which exerts a lifting force on the demountable cylinder block through a resilient member.

It may be that the demountable cylinder block is removed using a lifting device comprising a tensile stress bearing member and a demountable cylinder block retaining portion supported by the tensile stress bearing member, the tensile stress bearing member extending vertically from directly above the centre of mass of the demountable cylinder block retaining portion and a selected demountable cylinder block attached to the demountable cylinder block retaining portion.

The lifting device may further comprise an arm which extends from the tensile stress bearing member to a demountable cylinder block retaining portion and the demountable cylinder block retaining portion extends downward and horizontally from the tensile stress bearing member.

The invention also extends to a method of removing and replacing a demountable cylinder block from a hydraulic pump in a renewable energy turbine generator further comprising the step of fitting a demountable cylinder block (either the same
cylinder block or a replacement cylinder block) using a lifting device which exerts a lifting force on the demountable cylinder block through a resilient member.

The provision of a resilient member is useful during both removal and replacement of a demountable cylinder block as it enables a small amount of manual adjustment of displacement by an operative, which is useful for manual movement or manipulation during the final stages of fitting or initial stages of removal. The resilient member may comprise a spring. A spring is advantageous in that the extent to which it is deformed (in a typical configuration the spring will lengthen as the applied force is increased) provides a simple visual gauge of the amount of force which is being applied.

It may be that the demountable cylinder block is removed using a handling device comprising a supported arm extending between a demountable cylinder block retaining portion at a first end and a counterweight at the opposite second end. The supported arm may be raised and lowered by a crane. The supported arm may be supported by a rigid support member. The supported arm may be supported by a sling. The rigid support member or sling may comprise a resilient member. The rigid support member or sling may extend from the supported arm to a connector. An arm adjusting member, such as a line including a winch, may extend from the connector to the second end of the arm.

The method may comprise the further step of replacing the removed demountable cylinder block, or introducing an alternative demountable cylinder block, to the position from which the demountable cylinder block was removed, before the fluid working machine is further operated.

The renewable energy turbine generator may be a wind turbine generator which provides energy to the hydraulic pump during normal operation through the drive shaft, driven by a plurality of turbine blades.

According to a second aspect of the present invention there is provided a renewable energy turbine generator comprising a hydraulic pump and a turbine, the hydraulic pump comprising:
an inward ring comprising a cam having a cam surface;
an outward ring comprising one or more demountable cylinder blocks, at least some of the demountable cylinder blocks comprising cylinders, with pistons slidably mounted in the cylinders and in engagement with the cam surface;
first and second axially spaced structural members disposed on opposite sides of the cam;
a housing which is removable (e.g. axially slidable or disassemblable) to reveal internal components (for example, the cylinders and cam) for maintenance and repair; and
a drive shaft coupled to the inward ring to rotate the inward ring during normal operation of the hydraulic pump;
characterised by means for rotating the outward ring about the drive shaft (which typically remains fixed in position) until a block selected for the demountable cylinder block reaches a selected position, and the selected block at the selected position can be removed, wherein the outward ring including the demountable cylinder blocks is configured to be rotatable about
   the drive shaft while the inward ring is fixed in position during maintenance of the hydraulic pump so that the selected block reaches the selected position.

It may be that the means for rotating the outward ring, until a selected demountable cylinder block reaches a selected position, comprise means for fixing the angular position of the inward ring, and a controller for actuating the fluid working machine to rotate the outward ring relative to the inward ring until a selected demountable cylinder block reaches a selected position while the angular position of the inward ring is fixed.

There is also disclosed a lifting mechanism for lifting a demountable part from
the outward ring of the hydraulic pump of a renewable energy turbine generator according to the second aspect of the invention to thereby remove the demountable cylinder block, the lifting mechanism including an elongate tensile stress bearing member, at least part of the length of which is resilient.

Preferably, the lifting mechanism includes an elongate tensile stress bearing member and an arm which extends from the tensile stress bearing member to a demountable cylinder block retaining portion, wherein the demountable cylinder block retaining portion extends downward and horizontally from the elongate tensile stress bearing member.

### Brief Description of Drawings

[fig.1]Figure 1 is an isometric projection of the components of the nacelle of a wind turbine including a hydraulic pump;
[fig.2A]Figure 2A is an isometric projection of the assembled hydraulic pump; [fig.2B]Figure 2B is an isometric projection of the hydraulic pump with the housing removed to show the internal components;
[fig.3]Figure 3 is an isometric projection of the hydraulic pump, without the housing, with two cylinder blocks removed;
[fig.4]Figure 4 is a schematic diagram of a radial cross section through the hydraulic pump;
[fig.5]Figure 5 is a schematic transverse cross-section through the hydraulic pump and lifting apparatus;
[fig.6[Figure 6 is a cross-section through apparatus for removing a demountable block from the hydraulic pump; and
[fig.7]Figure 7 is a cross-section through alternative apparatus for removing a demountable block from the hydraulic pump.

### Description of Embodiments

An example embodiment of the invention will now be described with reference to the maintenance of a pump located within the nacelle of a WTG. However, the methods and apparatus of the invention may be applied to large pumps within other types of renewable energy extraction devices.

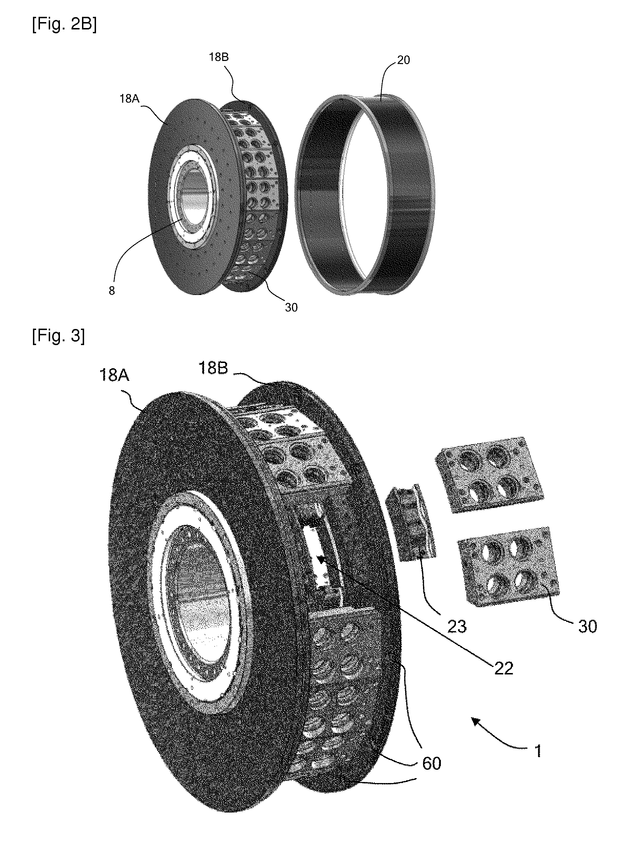

With reference to Figures 1 through 4, a variable displacement radial piston pump 1
has a size and construction suitable for application in the nacelle 2 of a wind turbine, where it is driven by a turbine 4. The turbine is connected through turbine shaft 6 (functioning as the drive shaft) to the hollow shaft 8 of the pump. Output pressurised fluid is used to drive motors 10 which in turn drive electrical generators 12. The pump is connected to a chassis 14 through a mounting plate 16 having torque arms 17 which couple the pump to the nacelle, through the chassis.

The pump comprises first and second end plates 18A and 18B and a housing 20 which can be slid axially to reveal internal components for maintenance and repair.

The pump is generally rotationally symmetric about an axis extending through the drive shaft. The pump comprises an inward ring shown generally as 21, comprising a toroidal ring cam support 22 having a plurality of wave-like ring cam segments 23 demountably secured thereto in use and which together form a ring cam. The ring cam is multilobal and more than one ring cam can be mounted to the ring cam support adjacent to each other and axially spaced.

The pump further comprises an outward ring shown generally as 24, comprising the first and second end plates 18A and 18B, which are independently mounted on the drive shaft 26 through bearings 28, and a plurality of demountable cylinder blocks 30. The drive shaft extends through both the first and second end plates and the end plates function as the first and second axially spaced structural members. The outward ring is continuous.

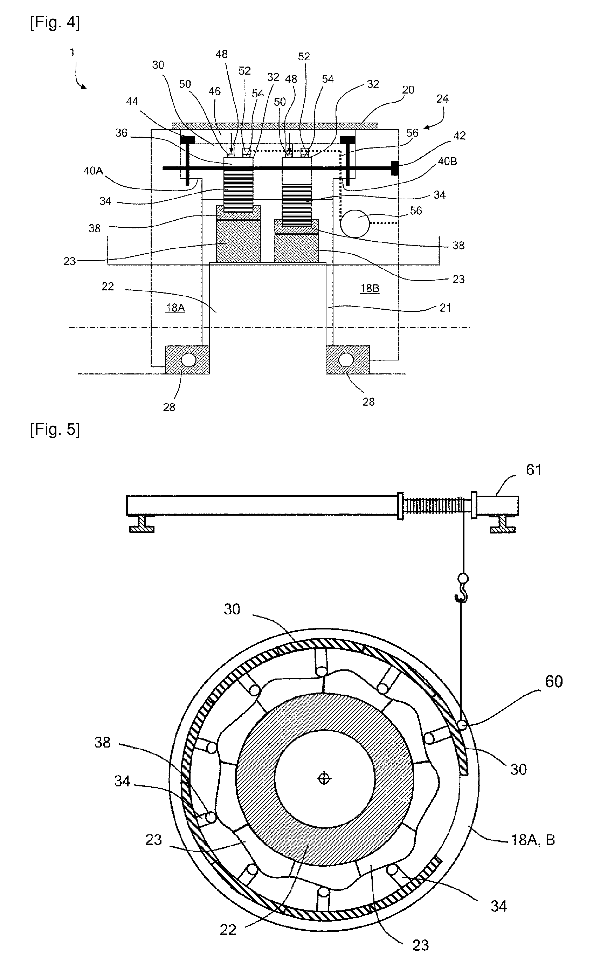

The cylinder blocks are shown in cross-section in Figure 4. Each comprises a plurality of cylinders 32 having a piston slidably mounted therein 34. Within each cylinder a working chamber of cyclically varying volume 36 is defined by the piston and the interior of the cylinder. Each piston is mounted on a roller 38 in driving engagement with the ring cam.

The first and second end plates each comprise a circular shoulder 40A and 40B, extending around the respective end plate, close to but within the outer perimeter of the first and second end plates. Each cylinder block is demountably retained on the circular shoulder. This defines the distance between each cylinder and the ring cam and provides structural strength. Each cylinder block is mounted in place by axial bolts 42 extending through apertures in the end plates and through the cylinder block, between cylinders, and also by radial bolts 44 extending through apertures in the cylinder blocks and into the circular shoulders. Typically, an axial bolt is provided towards each circumferentially spaced end of each cylinder block and a pair of radial bolts (one for each end plate) is provided towards each circumferentially spaced end of each cylinder block.

The volume between the outer housing and the cylinder blocks functions as a low pressure manifold 46, receiving hydraulic fluid to be supplied to the pump. The fluid in the low pressure manifold has a preload pressure of a few atmospheres. This helps to force the pistons against the ring cam. Working fluid is supplied from this cavity into each working chamber through a conduit 48 and electronically controlled valve 50. A further conduit 52, functions as part of a high pressure manifold, receiving fluid via a check valve 54. The conduit extends through the cylinder block and radially inwards through ports in the cylinder block and the shoulder of the second end plate, to further conduits for outputting high pressure fluid 56. At least one of each pair of cooperating ports has a seal. The second end plate includes outflow ports (not shown) for delivering high pressure fluid to a load, such as a hydraulic motor which in turn drives an electricity generator.

In the assembled machine, the cylinder blocks not only function as housings for the piston cylinders, but also provide structural integrity. They are flush to both the first and second end plates and are axially and radially bolted into position in use, at each circumferentially spaced end. They can therefore resist forces acting between the end plates in use, for example forces arising from the weight of the pump which is supported predominantly through the mounting plate which is attached to only the first end plate, and torsional forces arising from the forces acting through the drive shaft and on the pistons, which do not extend directly radially but at a slight angle. The radial bolts also act to resist outwards forces on the cylinder blocks arising from the outwards forces of the ring cam acting on the pistons and the preload pressure in the low pressure manifold.

In a first example maintenance method according to the invention, the blades of the WTG are controlled (e.g. feathered, or braked) to come to a standstill and the drive shaft is fixed in position using a pin, as is known in the art. Next, hydraulic fluid is drained from the system, in particular from the low and high pressure manifolds, the cylinders and the crankcase (which includes the bearings, piston rollers etc.). Once the hydraulic fluid has been drained, plumbing connections to the high and low pressure manifold are removed, as are electrical connections to the pump. The housing is then slid axially to expose the demountable blocks and cylinders.

The outward ring is then decoupled from the nacelle. This can be achieved in different ways in different embodiments. For example, the pump might be moved a short distance away from the mounting plate and torque arms, after the removal of bolts fixing the pump to the mounting plate and torque arms. Alternatively, the mounting plate and torque arms might be moved a short distance from the pump. In some embodiments, the mounting plate or torque arms are jointed to the outward ring through one or more torque pins which can be removed. In still further embodiments, the mounting plate and torque arms remain attached to the outward ring but are decoupled from the nacelle.

The result of this procedure is that the drive shaft, and therefore the inward ring, is fixed in position but the outward ring can rotate relative to the inward ring. The next stage is that the outward ring is rotated relative to the inward ring until it reaches a desired orientation. If the outward ring is not too massive and the friction from the bearing is not too high, it might be possible for the outward ring to be rotated manually, as mass is distributed evenly around its circumference. Otherwise, the outward ring can be rotated by an auxiliary motor. In some embodiments, the end plates contain a plurality of apertures 60 distributed around their periphery and a crane 61 located above the pump can be linked to one or more apertures and pull on the end plates, thereby rotating the outward ring relative to the inward ring until a desired orientation is obtained. Alternatively, or additionally, a plurality of handholds may be provided around the periphery of the outward ring.

Thereafter, one or more demountable blocks can be removed. Firstly, the axial bolts are loosened. If need be, spreader bars are fitted between the end plates to slightly separate them and to facilitate the removal of the blocks. Spreader bars are also useful to maintain the structural integrity of the pump once several demountable blocks have been removed. Secondly, a crane is attached to a demountable block, as shown in Figure 5, to provide force to lift the demountable block. The location of the demountable block will have been selected depending on what is most suitable given the available lifting apparatus. In the configuration of Figure 5, a demountable block located just below the axis of the pump has been removed using the crane and the crane is attached to a demountable block located just above the axis, which is to be removed next. Alternatively, demountable blocks might be removed from the top.

Once the demountable blocks, including the cylinders, have been removed, ring cam segments may be removed radially through the resulting gap in the outward ring. In the illustrated design, two adjacent demountable blocks must be removed before a ring cam segment can be removed.

Maintenance may involve replacing one or more parts, for example, replacing a ring cam segment or a demountable block, or components such as cylinders, pistons, piston rollers etc. Parts may be inspected or tested, either in situ, or after removal before they are replaced.

In order to return the machine to operation, demountable blocks (either the same blocks, or replacement blocks) are lowered into position using the crane, any spreader bars are removed, the axial bolts are replaced, and then the outer ring is recoupled to the nacelle by re-engaging the torque arms. Typically, there is only one correct orientation for the outer ring so that hydraulic fluid and electrical connections can be attached correctly. The housing is then replaced, electrical and hydraulic fluid connections are attached and hydraulic fluid is returned to the fluid manifolds (including the volume around the demountable blocks) and crankcase.

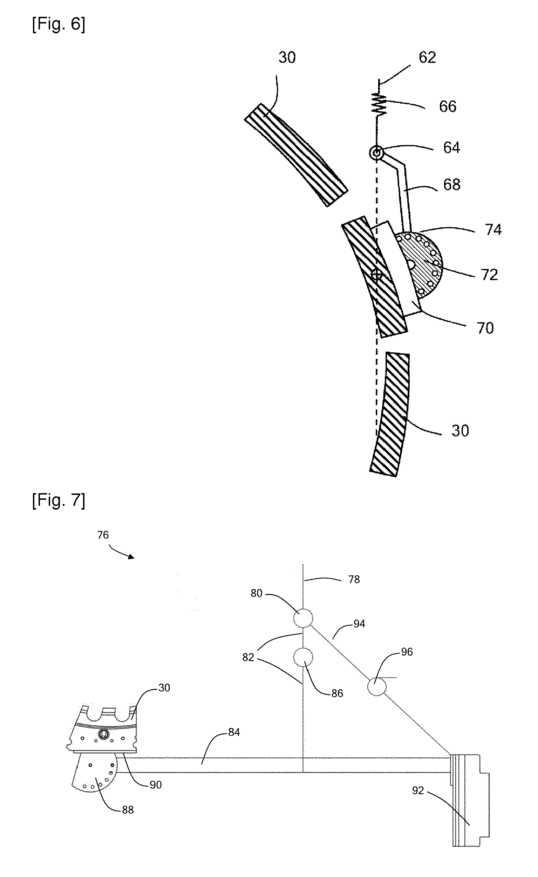

Figure 6 illustrates an alternative lifting arrangement, which is advantageous for lifting demountable blocks from positions other than the top of the outward ring. A line 62 extends down from a crane 60 to a connector 64. The line is divided into two portions by a spring 66. A crooked arm 68 extends from the connector to a lifting plate 70, the angle of which relative to the horizontal is adjustable with a rotatable support 72. The rotatable support enables a demountable block to be gripped at an orientation which can be selected by a user and fixed using a pin through a selected hole 74 and the crooked arm is arranged so that the combined centre of mass of the demountable block and the other parts of the lifting apparatus hanging from the connector (e.g. the crooked arm, lifting plate and rotatable support) is directly underneath the connector. Thus, the demountable block can be lifted vertically without it swinging to one side or the other. The crane is operated to lift the line until the tension in the spring is such that the lifting force exerted on the demountable block is not quite sufficient to lift the demountable block from its position, but is sufficient that a human can manually remove the demountable block by applying a limited amount of additional force. This is advantageous as a human operator can apply force carefully, reducing the chance of damage to the demountable block. Instead of a spring, the line 62 might have a resilient region.

Figure 7 shows a further alternative lifting arrangement 76, which can remove demountable blocks with a downward component, for example, from the bottom of the outward ring. A line 78 extends vertically downwards from a crane to a connector 80. A rigid support member (e.g. steel rod) 82 extends downwards from the connector to an arm 84. The rigid support member has a pivot point 86, such as a hinge, part way along its length to enable it to flex in use. The arm extends from the rigid support member to a rotatable support 88 and support plate 90 for attachment to a demountable block, at one end, and to a counterweight 92 at the other end. An arm adjusting line 94 extends from the connector to the counterweight through a ratchet winch 96.

Thus, the lifting arrangement can be lowered using the crane and positioned just below a demountable block. The rotatable support is adjusted to the orientation of a demountable block at a desired location (e.g. the base of the outward ring) and the support plate is attached to the selected demountable block. The weight of the counterweight is held by the arm adjusting line enabling an operative to readily attached the support plate to the demountable block. The demountable block can then be removed downwards by operating the crane. The ratchet winch can be adjusted to alter the length of the arm adjusting line and thereby raise or lower the support plate to facilitate the removal, or subsequent replacement, of a demountable block. In some embodiments, the rigid support member is replaced with a flexible sling. In some embodiments, the crane is attached directly to the connector. The ratchet winch might be replaced with another length varying member, which may be resilient, for example a spring.

In an alternative procedure, it is possible for the outward ring to be rotated relative to the inward ring by supplying high pressure fluid to one or more cylinders of the pump, to cause the cylinders to execute one or more motoring strokes, before hydraulic fluid is drained from the pump, to thereby rotate the outward ring relative to the inward ring, after the outward ring has been decoupled from the nacelle.

It is also possible for the inward ring to be decoupled from the turbine blades. In this case, the inward ring and the outward ring could be rotated together using an auxiliary motor once the outward ring has been decoupled from the nacelle. In some embodiments, once the outward ring was rotated to a desired orientation and selected demountable blocks were removed from the outward ring, the inward ring could be rotated to enable the ring cam to be inspected and maintained without further rotation of the outward ring.

Accordingly, the invention has provided a fluid working machine which is readily maintainable in a difficult to access location, such as in the nacelle of a wind turbine tower, despite the substantial mass of machine required in applications such as large scale wind power generation.

A number of different types of variable displacement radial piston fluid working machine are known and the invention is applicable with many of these types of machine. However, the fluid working machine may be a fluid working machine which is operable to select the volume to be displaced by working chambers during individual volume cycles on each successive cycle of working chamber volume by control of the timing of the opening or closing of electronically controlled valves interposed between each cylinder and the low pressure manifold, to select whether a given cycle of working chamber volume is a pumping cycle in which there is a net displacement of working fluid from the low pressure manifold to the high pressure manifold, or an idle cycle in which there is no net displacement of working fluid from the low pressure manifold to the high pressure manifold, either because the cylinder remains in fluid communication with the low pressure manifold throughout a cycle, or because the cylinder remains sealed throughout a cycle.

Further variation and modifications may be made within the scope of the invention herein disclosed.

### Reference Signs List

- 1: Pump
- 2: Nacelle
- 4: Turbine
- 6: Turbine shaft
- 8: Drive shaft of pump
- 10: Hydraulic motor
- 12: Electrical generator
- 14: Chassis
- 16: Mounting plate
- 17: Torque arms
- 18A: First end plate
- 18B: Second end plate
- 20: Housing
- 21: Inward ling
- 22: Ring cam support
- 23: Ring cam segment
- 24: Outward ring
- 26: Drive shaft
- 28: Bearings
- 30: Demountable cylinder block
- 32: Cylinders
- 34: Pistons
- 36: Working chambers
- 38: Piston rollers
- 40A,B: Circular shoulders
- 42: Axial bolts
- 44: Radial bolts
- 46: Low pressure manifold
- 48: Conduit
- 50: Electronically controlled valve
- 52: Further conduit
- 54: Check valve
- 56: Conduits for high pressure fluid
- 60: Apertures
- 61: Crane
- 62: Line
- 64: Connector
- 66: Spring
- 68: Crooked arm
- 70: Lifting plate
- 72: Rotatable support
- 74: Holes
- 76: Alternative lifting arrangement
- 78: Line
- 80: Connector
- 82: Rigid support member
- 84: Arm
- 86: Pivot point
- 88: Rotatable support
- 90: Support plate
- 92: Counterweight
- 94: Arm adjusting line
- 96: Ratchet winch

## Claims

1. A method of removing a demountable cylinder block (30) from a hydraulic pump (1) in a renewable energy turbine generator, wherein the hydraulic pump (1) comprises:
an inward ring (21) comprising a cam having a cam surface;
an outward ring (24) comprising one or more demountable cylinder blocks (30), at least some of the demountable cylinder blocks (30) comprising cylinders (32), with pistons (34) slidably mounted in the cylinders (32) and in engagement with the cam surface;
first and second axially spaced structural members (18A, 18B) disposed on opposite sides of the cam;
a housing (20) which is removable to reveal internal components for maintenance and repair; and
a drive shaft (6) coupled to the inward ring (21);
the method **characterised by** rotating the outward ring (24) about the drive shaft (6) until the demountable cylinder block (30) reaches a selected position, and then removing the demountable cylinder block (30) at the selected position, wherein the outward ring (24) including the demountable cylinder blocks (30) is configured to be rotatable about the drive shaft (6) while the inward ring (21) is fixed in position during maintenance of the hydraulic pump (1) so that the selected block reaches the selected position.

2. A method of removing a demountable cylinder block (30) from a hydraulic pump (1) in a renewable energy turbine generator according to claim 1, wherein the drive shaft (6) remains fixed in position.

3. A method of removing a demountable cylinder block (30) from a hydraulic pump (1) in a renewable energy turbine generator according to claim 1, wherein the hydraulic pump (1) is operated to rotate the outward ring (24) relative to the inward ring (21) by supplying pressurised fluid to at least some of the said cylinders (32) to cause the piston cylinders to carry out motoring cycles and thereby drive the outward ring (24) to rotate relative to the inward ring (21).

4. A method of removing a demountable cylinder block (30) from a hydraulic pump (1) in a renewable energy turbine generator according to claim 1, wherein the renewable energy turbine generator comprises one or more torque reaction devices which detachably connect the hydraulic pump (1) to a support to prevent rotation of the hydraulic pump (1) during normal operation, and the method comprises detaching the one or more torque reaction devices to enable the hydraulic pump (1) to be rotated relative to the support.

5. A method of removing a demountable cylinder block (30) from a hydraulic pump (1) in a renewable energy turbine generator according to claim 4, wherein the hydraulic pump (1) is detachable from the one or more torque reaction devices by sliding the hydraulic pump (1) or the one or more torque reaction devices.

6. A method of removing a demountable cylinder block (30) from a hydraulic pump (1) in a renewable energy turbine generator according to claim 4, wherein the one or more torque reaction devices comprise at least one electrical cable through which electrical signals are provided to or received from the hydraulic pump (1), by way of a said electrical connector or at least one hydraulic line through which hydraulic fluid is supplied to or received from the hydraulic pump (1) by way of the said hydraulic connectors and the method comprises detaching a said electrical cable from a said electrical connector or decoupling a said hydraulic line from a said hydraulic connector.

7. A method of removing a demountable cylinder block (30) from a hydraulic pump (1) in a renewable energy turbine generator according to claim 1, wherein the outward ring (24) comprises a plurality of said demountable cylinder blocks (30) arranged around the axis of the outward ring (24).

8. A method of removing a demountable cylinder block (30) from a hydraulic pump (1) in a renewable energy turbine generator according to claim 1, wherein the hydraulic pump (1) comprises electrical connecters for coupling electrical devices within the hydraulic pump (1) to external electrical connections and the method comprises decoupling the electrical connecters before the outward ring (24) is rotated, and wherein the hydraulic pump (1) comprises hydraulic connecters for coupling hydraulic lines within the hydraulic pump (1) to external hydraulic lines, and the method comprises decoupling the hydraulic connecters before the outward ring (24) is rotated.

9. A method of removing a demountable cylinder block (30) from a hydraulic pump (1) in a renewable energy turbine generator according to claim 1, wherein hydraulic fluid is drained from the hydraulic pump (1) before the outward ring is rotated relative to the inward ring.

10. A method of removing a demountable cylinder block (30) from a hydraulic pump (1) in a renewable energy turbine generator according to claim 1, wherein the demountable cylinder block (30) is removed using a lifting device which exerts a lifting force on the demountable cylinder block (30) through a resilient member (66).

11. A method of removing a demountable cylinder block (30) from a hydraulic pump (1) in a renewable energy turbine generator according to claim 10, wherein the demountable cylinder block (30) is removed using a lifting device comprising a tensile stress bearing member and a demountable cylinder block retaining portion supported by the tensile stress bearing member, the tensile stress bearing member extending vertically from directly above the centre of mass of the demountable cylinder block retaining portion and a selected demountable cylinder block (30) attached to the demountable cylinder block retaining portion.

12. A method of removing and replacing a demountable cylinder block (30) from a hydraulic pump (1) in a renewable energy turbine generator according to claim 1, further comprising the step of fitting a demountable cylinder block (30) using a lifting device which exerts a lifting force on the demountable cylinder block (30) through a resilient member (66).

13. A method of removing a demountable cylinder block (30) from a hydraulic pump (1) in a renewable energy turbine generator according to claim 1, wherein the demountable cylinder block (30) is removed using a lifting device which exerts a lifting force which is the majority of the lifting force required to remove the demountable cylinder block (30) and wherein a human operative provides the balance of the force required to remove the demountable cylinder block (30).

14. A method of removing a demountable cylinder block (30) from a hydraulic pump (1) in a renewal energy turbine generator according to claim 1, wherein the demountable cylinder block (30) is removed using a handling device (76) comprising a supported arm extending (84) between a demountable cylinder block retaining portion at a first end and a counterweight (92) at the opposite second end.

15. A method of removing a demountable cylinder block (30) from a hydraulic pump (1) in a renewable energy turbine generator according to claim 1, wherein the outward ring (24) has an axis extending through the drive shaft (6) and the selected position is above the height of the axis.

16. A method of removing a demountable cylinder block (30) from a hydraulic pump (1) according to claim 1, wherein, after the removal of one or more demountable cylinder blocks (30), the method comprises rotating the inward ring (21) to reveal parts of the inward ring (21) through the gap left by the removed demountable cylinder blocks (30).

17. A method of removing a demountable cylinder block (30) from a hydraulic pump (1) according to claim 1, wherein the renewable energy turbine generator is a wind turbine generator which provides energy to the hydraulic pump (1) during normal operation through the drive shaft (6), driven by a plurality of turbine blades.

18. A renewable energy turbine generator comprising a hydraulic pump (1) and a turbine, the hydraulic pump (1) comprising:
an inward ring (21) comprising a cam having a cam surface;
an outward ring (24) comprising a plurality of demountable cylinder blocks (30) disposed around an axis of the outward ring (24) to form the outward ring (24), at least some of the demountable cylinder blocks (30) comprising cylinders (32), with pistons (34) slidably mounted in the cylinders and in engagement with the cam surface;
first and second axially spaced structural members (18A, 18B) disposed on opposite sides of the cam;
a housing (20) which is removable to reveal internal components for maintenance and repair; and
a drive shaft (6) coupled to the inward ring (21) to rotate the inward ring (21) during normal operation of the hydraulic pump (1);
**characterised by** means for rotating the outward ring (24) about the drive shaft (6) until a block selected from the demountable cylinder blocks (30) reaches a selected position and the selected block at the selected position can be removed, wherein the outward ring (24) including the demountable cylinder blocks (30) is configured to be rotatable about the drive shaft (6) while the inward ring (21) is fixed in position during maintenance of the hydraulic pump (1) so that the selected block reaches the selected position.

19. A renewable energy turbine generator according to claim 18, wherein the renewable energy turbine generator is a wind turbine generator and the drive shaft (6) is coupled to a plurality of turbine blades.

## Patentansprüche

1. Verfahren zum Entfernen eines abbaubaren Zylinderblocks (30) aus einer Hydraulikpumpe (1) in einem Turbinengenerator für erneuerbare Energien, wobei die Hydraulikpumpe (1) umfasst:
einen innen gelegenen Ring (21), umfassend einen Nocken mit einer Nockenoberfläche; einen außen gelegenen Ring (24), umfassend einen oder mehrere abbaubare Zylinderblöcke (30), wobei mindestens einige der abbaubaren Zylinderblöcke (30) Zylinder (32) mit Kolben (34) umfassen, die verschiebbar in den Zylindern (32) und in Eingriff mit der Nockenoberfläche eingebaut sind;
erste und zweite axial beabstandete Strukturelemente (18A, 18B), die an gegenüberliegenden Seiten des Nockens angeordnet sind;
ein Gehäuse (20), das zum Freilegen von internen Komponenten zur Wartung und Reparatur entfernt werden kann; und
eine Antriebswelle (6), die mit dem innen gelegenen Ring (21) gekoppelt ist;
wobei das Verfahren durch Drehen des außen gelegenen Rings (24) um die Antriebswelle (6) gekennzeichnet ist, bis der abbaubare Zylinderblock (30) eine ausgewählte Position erreicht, und dann Entfernen des abbaubaren Zylinderblocks (30) an der ausgewählten Position, wobei der außen gelegene Ring (24), der die abbaubaren Zylinderblöcke (30) aufweist, zum Drehen um die Antriebswelle (6) konfiguriert ist, während der innen gelegene Ring (21) während der Wartung der Hydraulikpumpe (1) vor Ort fixiert ist, sodass der ausgewählte Block die ausgewählte Position erreicht.

2. Verfahren zum Entfernen eines abbaubaren Zylinderblocks (30) aus einer Hydraulikpumpe (1) in einem Turbinengenerator für erneuerbare Energien nach Anspruch 1, wobei die Antriebswelle (6) vor Ort fixiert bleibt.

3. Verfahren zum Entfernen eines abbaubaren Zylinderblocks (30) aus einer Hydraulikpumpe (1) in einem Turbinengenerator für erneuerbare Energien nach Anspruch 1, wobei die Hydraulikpumpe (1) zum Drehen des außen gelegenen Rings (24) in Bezug auf den innen gelegenen Ring (21) durch Zuführen von druckbeaufschlagtem Fluid zu mindestens einigen der Zylinder (32) betrieben wird, um zu bewirken, dass die Kolbenzylinder Motorantriebszyklen ausführen und dadurch den außen gelegenen Ring (24) zum Drehen in Bezug auf den innen gelegenen Ring (21) antreiben.

4. Verfahren zum Entfernen eines abbaubaren Zylinderblocks (30) aus einer Hydraulikpumpe (1) in einem Turbinengenerator für erneuerbare Energien nach Anspruch 1, wobei der Turbinengenerator für erneuerbare Energien eine oder mehrere Drehmoment-Reaktionsvorrichtungen umfasst, welche die Hydraulikpumpe (1) lösbar mit einem Träger verbinden, um die Drehung der Hydraulikpumpe (1) während des Normalbetriebs zu verhindern, wobei das Verfahren das Lösen einer oder mehrerer Drehmoment-Reaktionsvorrichtungen umfasst, um zu ermöglichen, dass die Hydraulikpumpe (1) in Bezug auf den Träger gedreht werden kann.

5. Verfahren zum Entfernen eines abbaubaren Zylinderblocks (30) aus einer Hydraulikpumpe (1) in einem Turbinengenerator für erneuerbare Energien nach Anspruch 4, wobei die Hydraulikpumpe (1) von der einen oder den mehreren Drehmoment-Reaktionsvorrichtungen durch Verschieben der Hydraulikpumpe (1) oder des einen oder der mehreren Drehmoment-Reaktionsvorrichtungen freigegeben werden kann.

6. Verfahren zum Entfernen eines abbaubaren Zylinderblocks (30) aus einer Hydraulikpumpe (1) in einem Turbinengenerator für erneuerbare Energien nach Anspruch 4, wobei die eine oder mehreren Drehmoment-Reaktionsvorrichtungen mindestens ein elektrisches Kabel umfassen, durch das elektrische Signale an die Hydraulikpumpe (1) mittels eines elektrischen Steckverbinders oder mindestens einer Hydraulikleitung bereitgestellt werden oder empfangen werden, durch die mittels der hydraulischen Steckverbinder Hydraulikfluid der Hydraulikpumpe (1) zugeführt wird oder davon aufgenommen wird, und wobei das Verfahren das Freigeben eines elektrischen Kabels von dem elektrischen Steckverbinder oder das Abkoppeln der hydraulischen Leitung von einem hydraulischen Steckverbinder umfasst.

7. Verfahren zum Entfernen eines abbaubaren Zylinderblocks (30) aus einer Hydraulikpumpe (1) in einem Turbinengenerator für erneuerbare Energien nach Anspruch 1, wobei der außen gelegene Ring (24) eine Vielzahl der abbaubaren Zylinderblöcke (30) umfasst, die um die Achse des außen gelegenen Rings (24) angeordnet sind.

8. Verfahren zum Entfernen eines abbaubaren Zylinderblocks (30) aus einer Hydraulikpumpe (1) in einem Turbinengenerator für erneuerbare Energien nach Anspruch 1, wobei die Hydraulikpumpe (1) zum Koppeln elektrischer Geräte elektrische Steckverbinder innerhalb der Hydraulikpumpe (1) für externe Verbindungen umfasst und wobei das Verfahren das Abkoppeln der elektrischen Steckverbinder vor dem Drehen des außen gelegenen Rings (24) umfasst, und wobei die Hydraulikpumpe (1) hydraulische Steckverbinder zum Koppeln von hydraulischen Leitungen innerhalb der Hydraulikpumpe (1) mit externen hydraulischen Leitungen umfasst, und wobei das Verfahren das Abkoppeln der hydraulischen Steckverbinder vor dem Drehen des außen gelegenen Rings (24) umfasst.

9. Verfahren zum Entfernen eines abbaubaren Zylinderblocks (30) aus einer Hydraulikpumpe (1) in einem Turbinengenerator für erneuerbare Energien nach Anspruch 1, wobei Hydraulikfluid aus der Hydraulikpumpe (1) vor dem Drehen des außen gelegenen Rings in Bezug auf den innen gelegenen Ring abgelassen wird.

10. Verfahren zum Entfernen eines abbaubaren Zylinderblocks (30) aus einer Hydraulikpumpe (1) in einem Turbinengenerator für erneuerbare Energien nach Anspruch 1, wobei der abbaubare Zylinderblock (30) mithilfe einer Hubvorrichtung entfernt wird, die über ein elastisches Element (66) eine Hubkraft auf den abbaubaren Zylinderblock (30) ausübt.

11. Verfahren zum Entfernen eines abbaubaren Zylinderblocks (30) aus einer Hydraulikpumpe (1) in einem Turbinengenerator für erneuerbare Energien nach Anspruch 10, wobei der abbaubare Zylinderblock (30) mithilfe einer Hubvorrichtung entfernt wird, die ein zugspannungstragendes Element und einen abbaubaren Zylinderblock-Halteabschnitt umfasst, der von dem zugspannungstragenden Element abgestützt wird, wobei sich das zugspannungstragende Element vertikal von direkt oberhalb der Mitte der Masse des abnehmbaren Zylinderblock-Halteabschnitts und einem ausgewählten abbaubaren Zylinderblock (30) erstreckt, der an dem abbaubaren Zylinderblock-Halteabschnitt befestigt ist.

12. Verfahren zum Entfernen und Auswechseln eines abbaubaren Zylinderblocks (30) aus einer Hydraulikpumpe (1) in einem Turbinengenerator für erneuerbare Energien nach Anspruch 1, ferner umfassend den Schritt des Einsetzens eines abbaubaren Zylinderblocks (30) mithilfe einer Hubvorrichtung, die eine Hubkraft auf den abbaubaren Zylinderblock (30) durch ein elastisches Element (66) ausübt.

13. Verfahren zum Entfernen eines abbaubaren Zylinderblocks (30) aus einer Hydraulikpumpe (1) in einem Turbinengenerator für erneuerbare Energien nach Anspruch 1, wobei der abbaubare Zylinderblock (30) mithilfe einer Hubvorrichtung entfernt wird, die eine Hubkraft ausübt, welche den Hauptteil der Hubkraft, die zum Entfernen des abnehmbaren Zylinderblocks (30) erfordert wird, darstellt, und wobei ein menschlicher Bediener den Ausgleich zwischen der erforderten Kraft zum Entfernen des abbaubaren Zylinderblocks (30) bereitstellt.

14. Verfahren zum Entfernen eines abbaubaren Zylinderblocks (30) aus einer Hydraulikpumpe (1) in einem Turbinengenerator für erneuerbare Energien nach Anspruch 1, wobei der abbaubare Zylinderblock (30) mithilfe einer Handhabungsvorrichtung (76) entfernt wird, die einen abgestützten Arm (84) umfasst, der sich zwischen einem abbaubaren 2ylinderblock-Halteabschnitt an einem ersten Ende und einem Gegengewicht (92) am gegenüberliegenden zweiten Ende erstreckt.

15. Verfahren zum Entfernen eines abbaubaren Zylinderblocks (30) aus einer Hydraulikpumpe (1) in einem Turbinengenerator für erneuerbare Energien nach Anspruch 1, wobei der außen gelegene Ring (24) eine Achse aufweist, die sich durch die Antriebswelle (6) erstreckt und die ausgewählte Position oberhalb der Höhe der Achse ist.

16. Verfahren zum Entfernen eines abbaubaren Zylinderblocks (30) aus einer Hydraulikpumpe (1) nach Anspruch 1, wobei nach dem Entfernen eines oder mehrerer abbaubarer Zylinderblöcke (30) das Verfahren das Drehen des innen gelegenen Rings (21) zum Freilegen von Teilen des innen gelegenen Rings (21) durch den Spalt umfasst, der von den entfernten abbaubaren Zylinderblöcken (30) hinterlassen wird.

17. Verfahren zum Entfernen eines abbaubaren Zylinderblocks (30) aus einer Hydraulikpumpe (1) nach Anspruch 1, wobei der Turbinengenerator für erneuerbare Energien ein Windturbinengenerator ist, welcher der Hydraulikpumpe (1) während des Normalbetriebs über die Antriebswelle (6), die durch eine Vielzahl von Turbinenschaufeln angetrieben wird, Energie bereitstellt.

18. Turbinengenerator für erneuerbare Energien, umfassend eine Hydraulikpumpe (1) und eine Turbine, wobei die Hydraulikpumpe (1) umfasst:
einen innen gelegenen Ring (21), umfassend einen Nocken mit einer Nockenoberfläche;
einen außen gelegenen Ring (24), umfassend eine Vielzahl abbaubarer Zylinderblöcke (30), die um eine Achse des außen gelegenen Rings (24) zum Bilden des außen gelegenen Rings (24) angeordnet sind, wobei mindestens einige der abbaubaren Zylinderblöcke (30) Zylinder (32) umfassen, wobei Kolben (34) verschiebbar in den Zylindern und in Eingriff mit der Nockenoberfläche eingebaut sind;
erste und zweite axial beabstandete Strukturelemente (18A, 18B), die an gegenüberliegenden Seiten des Nockens angeordnet sind;
ein Gehäuse (20), das zum Freilegen von internen Komponenten zur Wartung und Reparatur entfernt werden kann; und
eine Antriebswelle (6), die mit dem innen gelegenen Ring (21) zum Drehen des innen gelegenen Rings (21) während des Normalbetriebs der Hydraulikpumpe (1) gekoppelt ist;
**gekennzeichnet durch** Mittel zum Drehen des außen gelegenen Rings (24) um die Antriebswelle (6), bis ein Block, der aus den abbaubaren Zylinderblöcken (30) ausgewählt wird, eine ausgewählte Position erreicht und der ausgewählte Block an der ausgewählten Position entfernt werden kann, wobei der außen gelegene Ring (24), der die abbaubaren Zylinderblöcke (30) aufweist, zum Drehen um die Antriebswelle (6) konfiguriert ist, während der innen gelegene Ring (21) während der Wartung der Hydraulikpumpe (1) vor Ort fixiert ist, sodass der ausgewählte Block die ausgewählte Position erreicht.

19. Turbinengenerator für erneuerbare Energien nach Anspruch 18, wobei der Turbinengenerator für erneuerbare Energien ein Windturbinengenerator ist und die Antriebswelle (6) mit einer Vielzahl von Turbinenschaufeln gekoppelt ist.

## Revendications

1. Procédé de démontage d'un bloc-cylindres démontable (30) d'une pompe hydraulique (1) dans un générateur de turbine à énergie renouvelable, dans lequel la pompe hydraulique (1) comprend :
une bague intérieure (21) comprenant une came ayant une surface de came ;
une bague extérieure (24) comprenant un ou plusieurs bloc-cylindres démontables (30), au moins certains des bloc-cylindres démontables (30) comprenant des cylindres (32), avec des pistons (34) montés de manière coulissante dans les cylindres (32) et venant en prise avec la surface de came ;
un premier et un second élément structurel espacés axialement (18A,18B) disposés sur des côtés opposés de la came ;
un carter (20) qui est démontable afin de révéler les composants internes à des fins de maintenance et réparation ; et
un arbre d'entraînement (6) couplé à la bague intérieure (21) ;
le procédé étant **caractérisé par** la rotation de la bague extérieure (24) autour de l'arbre d'entraînement (6) jusqu'à ce que le bloc-cylindres démontable (30) atteigne une position sélectionnée, et ensuite le démontage du bloc-cylindres démontable (30) à la position sélectionnée, dans lequel la bague extérieure (24) incluant les bloc-cylindres démontables (30) est configurée afin d'être rotative autour de l'arbre d'entraînement (6) alors que la bague intérieure (21) est fixée en position pendant la maintenance de la pompe hydraulique (1) de sorte que le bloc sélectionné atteigne la position sélectionnée.

2. Procédé de démontage d'un bloc-cylindres démontable (30) d'une pompe hydraulique (1) dans un générateur de turbine à énergie renouvelable selon la revendication 1, dans lequel l'arbre d'entraînement (6) reste fixé en position.

3. Procédé de démontage d'un bloc-cylindres démontable (30) d'une pompe hydraulique (1) dans un générateur de turbine à énergie renouvelable selon la revendication 1, dans lequel la pompe hydraulique (1) est mise en fonctionnement afin de tourner la bague extérieure (24) par rapport à la bague intérieure (21) en alimentant un fluide pressurisé dans au moins certains desdits cylindres (32) afin d'amener les cylindres de piston à effectuer des cycles motorisés et ainsi entraîner la bague extérieure (24) afin de tourner par rapport à la bague intérieure (21).

4. Procédé de démontage d'un bloc-cylindres démontable (30) d'une pompe hydraulique (1) dans un générateur de turbine à énergie renouvelable selon la revendication 1, dans lequel le générateur de turbine à énergie renouvelable comprend un ou plusieurs dispositifs à réaction de couple qui raccordent de manière amovible la pompe hydraulique (1) à un support afin d'empêcher la rotation de la pompe hydraulique (1) pendant un fonctionnement normal et le procédé comprend de détacher le ou les dispositifs à réaction de couple afin de permettre à la pompe hydraulique (1) de tourner par rapport au support.

5. Procédé de démontage d'un bloc-cylindres démontable (30) d'une pompe hydraulique (1) dans un générateur de turbine à énergie renouvelable selon la revendication 4, dans lequel la pompe hydraulique (1) est détachable du ou des dispositifs à réaction de couple en coulissant la pompe hydraulique (1) ou le ou les dispositifs à réaction de couple.

6. Procédé de démontage d'un bloc-cylindres démontable (30) d'une pompe hydraulique (1) dans un générateur de turbine à énergie renouvelable selon la revendication 4, dans lequel le ou les dispositifs à réaction de couple comprennent au moins un câble électrique par l'intermédiaire duquel des signaux électriques sont fournis à ou reçus de la pompe hydraulique (1), au moyen d'un dit connecteur électrique ou au moins une ligne hydraulique, par l'intermédiaire de laquelle un fluide hydraulique est alimenté dans ou reçu de la pompe hydraulique (1) au moyen desdits connecteurs hydrauliques et le procédé comprend de détacher un dit câble électrique d'un dit connecteur électrique ou découpler une dite ligne hydraulique d'un dit connecteur hydraulique.

7. Procédé de démontage d'un bloc-cylindres démontable (30) d'une pompe hydraulique (1) dans un générateur de turbine à énergie renouvelable selon la revendication 1, dans lequel la bague extérieure (24) comprend une pluralité desdits bloc-cylindres démontables (30) disposée autour de l'axe de la bague extérieure (24).

8. Procédé de démontage d'un bloc-cylindres démontable (30) d'une pompe hydraulique (1) dans un générateur de turbine à énergie renouvelable selon la revendication 1, dans lequel la pompe hydraulique (1) comprend des connecteurs électriques pour coupler des dispositifs électriques à l'intérieur de la pompe hydraulique (1) à des connexions électriques externes et le procédé comprend de découpler les connecteurs électriques avant que la bague extérieure (24) soit tournée, et dans lequel la pompe hydraulique (1) comprend des connecteurs hydrauliques pour coupler des lignes hydrauliques à l'intérieur de la pompe hydraulique (1) à des lignes hydrauliques externes et le procédé comprend de découpler les connecteurs hydrauliques avant que la bague extérieure (24) soit tournée.

9. Procédé de démontage d'un bloc-cylindres démontable (30) d'une pompe hydraulique (1) dans un générateur de turbine à énergie renouvelable selon la revendication 1, dans lequel un fluide hydraulique est drainé de la pompe hydraulique (1) avant que la bague extérieure soit tournée par rapport à la bague intérieure.

10. Procédé de démontage d'un bloc-cylindres démontable (30) d'une pompe hydraulique (1) dans un générateur de turbine à énergie renouvelable selon la revendication 1, dans lequel le bloc-cylindres démontable (30) est démonté en utilisant un dispositif de levage qui exerce une force de levage sur le bloc-cylindres démontable (30) par l'intermédiaire d'un élément résilient (66).

11. Procédé de démontage d'un bloc-cylindres démontable (30) d'une pompe hydraulique (1) dans un générateur de turbine à énergie renouvelable selon la revendication 10, dans lequel le bloc-cylindres démontable (30) est démonté en utilisant un dispositif de levage comprenant un élément supportant une contrainte de traction et une portion retenant un bloc-cylindres démontable soutenue par l'élément supportant une contrainte de traction, l'élément supportant une contrainte de traction s'étendant verticalement à partir de directement au-dessus du centre de masse de la portion retenant le bloc-cylindres démontable et un bloc-cylindres démontable sélectionné (30) fixé à la portion retenant le bloc-cylindres démontable.

12. Procédé de démontage et remplacement d'un bloc-cylindres démontable (30) d'une pompe hydraulique (1) dans un générateur de turbine à énergie renouvelable selon la revendication 1, comprenant en outre l'étape d'installation d'un bloc-cylindres démontable (30) en utilisant un dispositif de levage qui exerce une force de levage sur le bloc-cylindres démontable (30) par l'intermédiaire d'un élément résilient (66).

13. Procédé de démontage d'un bloc-cylindres démontable (30) d'une pompe hydraulique (1) dans un générateur de turbine à énergie renouvelable selon la revendication 1, dans lequel le bloc-cylindres démontable (30) est démonté en utilisant un dispositif de levage qui exerce une force de levage qui est la majorité de la force de levage requise pour démonter le bloc-cylindres démontable (30) et dans lequel un opérateur humain fournit l'équilibre de la force requise pour démonter le bloc-cylindres démontable (30).

14. Procédé de démontage d'un bloc-cylindres démontable (30) d'une pompe hydraulique (1) dans un générateur de turbine à énergie renouvelable selon la revendication 1, dans lequel le bloc-cylindres démontable (30) est démonté en utilisant un dispositif de manipulation (76) comprenant un bras soutenu s'étendant (84) entre une portion retenant le bloc-cylindres démontable à une première extrémité et un contrepoids (92) à la seconde extrémité opposée.

15. Procédé de démontage d'un bloc-cylindres démontable (30) d'une pompe hydraulique (1) dans un générateur de turbine à énergie renouvelable selon la revendication 1, dans lequel la bague extérieure (24) possède un axe s'étendant à travers l'arbre d'entraînement (6) et la position sélectionnée est au-dessus de la hauteur de l'axe.

16. Procédé de démontage d'un bloc-cylindres démontable (30) d'une pompe hydraulique (1) selon la revendication 1, dans lequel, après le démontage d'un ou plusieurs bloc-cylindres démontables (30), le procédé comprend de tourner la bague intérieure (21) afin de révéler des parties de la bague intérieure (21) à travers l'interstice laissé par les bloc-cylindres démontables démontés (30).

17. Procédé de démontage d'un bloc-cylindres démontable (30) d'une pompe hydraulique (1) selon la revendication 1, dans lequel le générateur de turbine à énergie renouvelable est un générateur de turbine éolienne qui fournit de l'énergie à la pompe hydraulique (1) pendant un fonctionnement normal par l'intermédiaire de l'arbre d'entraînement (6) entraîné par une pluralité d'aubes de turbine.

18. Générateur de turbine à énergie renouvelable comprenant une pompe hydraulique (1) et une turbine, la pompe hydraulique (1) comprenant .
une bague intérieure (21) comprenant une came ayant une surface de came ;
une bague extérieure (24) comprenant une pluralité de bloc-cylindres démontables (30) disposée autour d'un axe de la bague extérieure (24) pour former la bague extérieure (24), au moins certains des bloc-cylindres démontables (30) comprenant des cylindres (32), avec des pistons (34) montés de manière coulissante dans les cylindres et venant en prise avec la surface de came ; un premier et un second élément structurel espacés axialement (18A,18B) disposés sur des côtés opposés de la came ;
un carter (20) qui est démontable afin de révéler les composants internes à des fins de maintenance et réparation ; et
un arbre d'entraînement (6) couplé à la bague intérieure (21) pour tourner la bague intérieure (21) pendant un fonctionnement normal de la pompe hydraulique (1) ;
**caractérisé par** des moyens pour la rotation de la bague extérieure (24) autour de l'arbre d'entraînement (6) jusqu'à ce qu'un bloc sélectionné parmi les bloc-cylindres démontables (30) atteigne une position sélectionnée et le bloc sélectionné à la position sélectionnée peut être démonté, dans lequel la bague extérieure (24) incluant les bloc-cylindres démontables (30) est configurée afin d'être rotative autour de l'arbre d'entraînement (6) alors que la bague intérieure (21) est fixée en position pendant la maintenance de la pompe hydraulique (1) de sorte que le bloc sélectionné atteigne la position sélectionnée.

19. Générateur de turbine à énergie renouvelable selon la revendication 18, dans lequel le générateur de turbine à énergie renouvelable est un générateur de turbine éolienne et l'arbre d'entraînement (6) est couplé à une pluralité d'aubes de turbine.
